(19) Europäisches Patentamt
European Patent Office
Office européen des brevets

(11) **EP 4 599 971 A1**

(12) **EUROPEAN PATENT APPLICATION**
published in accordance with Art. 153(4) EPC

(43) Date of publication:
**13.08.2025 Bulletin 2025/33**

(21) Application number: **22965795.2**

(22) Date of filing: **16.11.2022**

(51) International Patent Classification (IPC):
**B23H 7/02** (2006.01)

(52) Cooperative Patent Classification (CPC):
**B23H 7/02**

(86) International application number:
**PCT/JP2022/042596**

(87) International publication number:
**WO 2024/105819 (23.05.2024 Gazette 2024/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **FANUC CORPORATION**
**Oshino-mura**
**Minamitsuru-gun**
**Yamanashi 401-0597 (JP)**

(72) Inventor: **TAGUCHI, Haruka**
**Minamitsuru-gun, Yamanashi 401-0597 (JP)**

(74) Representative: **Keil & Schaafhausen**
**Patentanwälte PartGmbB**
**Bockenheimer Landstraße 25**
**60325 Frankfurt am Main (DE)**

(54) **DEVICE AND METHOD FOR CONTROLLING WIRE ELECTRICAL DISCHARGE MACHINE**

(57)     According to an aspect of the present disclosure, a device for controlling a wire electrical discharge machine comprises: an acquisition unit that acquires a detected value of a machining voltage; a digital low-pass filter that outputs a corrected value by removing noise from the detected value; a determination unit that makes at least one of a first determination and a second determination on the basis of the detected value and the corrected value, the first determination determining the degree of noise removal by the digital low-pass filter, the second determination determining a response lag of the digital low-pass filter; an adjustment unit that adjusts a parameter of the digital low-pass filter; and a machining control unit that controls electrical discharge machining on the basis of the corrected value.

FIG. 1

EP 4 599 971 A1

**Description**

TECHNICAL FIELD

The present disclosure relates to a control device and a control method for a wire electrical discharge machine (a device and a method for controlling a wire electrical discharge machine).

BACKGROUND ART

In JP 6883138 B1, a wire electrical discharge machine is disclosed.

SUMMARY OF THE INVENTION

In such a wire electrical discharge machine, stable electrical discharge machining is desired.

A first aspect of the present disclosure is characterized by a control device for a wire electrical discharge machine configured to carry out electrical discharge machining on a workpiece, by applying a machining voltage to an electrode gap between a wire electrode and the workpiece to generate an electrical discharge at the electrode gap while moving the wire electrode and the workpiece relatively along a machining path, the control device including an acquisition unit configured to acquire a detection value of the machining voltage from a voltage sensor configured to detect the machining voltage, a digital low pass filter configured to output a compensated value obtained by compensating the detection value by removing noise from the detection value, a determination unit configured to carry out, based on the detection value and the compensated value, at least one of a first determination to determine a degree of noise removal by the digital low pass filter, or a second determination to determine a response delay of the digital low pass filter, an adjustment unit configured to adjust a parameter of the digital low pass filter, based on a determination result of the determination unit, and a machining control unit configured to control the electrical discharge machining based on the compensated value.

A second aspect of the present invention is characterized by a control method for a wire electrical discharge machine configured to carry out electrical discharge machining on a workpiece, by applying a machining voltage to an electrode gap between a wire electrode and the workpiece to generate an electrical discharge at the electrode gap while moving the wire electrode and the workpiece relatively along a machining path, the control method including an acquisition step of acquiring a detection value of the machining voltage from a voltage sensor configured to detect the machining voltage, a compensated value output step of outputting a compensated value obtained by compensating the detection value by removing noise from the detection value by using a digital low pass filter, a determination step of carrying out, based on the detection value and the compensated value, at least one of a first determination to determine a degree of noise removal by the digital low pass filter, or a second determination to determine a response delay of the digital low pass filter, an adjustment step of adjusting a parameter of the digital low pass filter, based on a determination result in the determination step, and a machining control step of controlling the electrical discharge machining based on the compensated value.

BRIEF DESCRIPTION OF DRAWINGS

[FIG. 1] FIG. 1 is a block diagram showing a wire electrical discharge machine, and a control device for the wire electrical discharge machine according to a first embodiment;
[FIG. 2] FIG. 2 is a diagram for describing an example of a smoothing process using a digital LPF;
[FIG. 3] FIG. 3 is a diagram illustrating a detection value of a machining voltage, and a compensated value of the detection value;
[FIG. 4] FIG. 4 is a diagram showing a first output value and a second output value which are output, respectively, based on the detection value and the compensated value;
[FIG. 5] FIG. 5 is a flowchart illustrating an example of a processing sequence in relation to a machining control of electrical discharge machining by the control device of the first embodiment;
[FIG. 6] FIG. 6A is a diagram illustrating a detection value of the machining voltage, and a compensated value of the detection value output by a digital LPF whose parameter is not adjusted, and FIG. 6B is a diagram illustrating a detection value of the machining voltage, and a compensated value of the detection value output by the digital LPF whose parameter is adjusted by the first embodiment;
[FIG. 7] FIG. 7 is a block diagram showing a control device according to a second embodiment;
[FIG. 8] FIG. 8 is a diagram showing a third output value and a fourth output value which are output, respectively, based on a detection value and a compensated value;

[FIG. 9] FIG. 9 is a flowchart illustrating an example of a processing sequence in relation to a machining control of electrical discharge machining by the control device of the second embodiment;

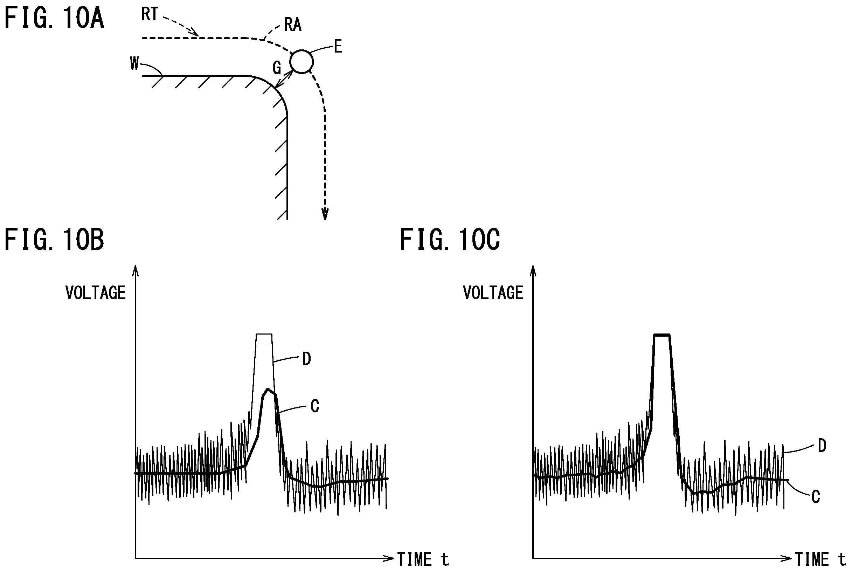

[FIG. 10] FIG. 10A is a diagram showing an example of a machining path having an outer corner shape, FIG. 10B is a diagram illustrating an example of the detection value and the compensated value output by the digital LPF the parameter of which is not adjusted, in the case that electrical discharge machining is carried out on the machining path including the outer corner shape, and FIG. 10C is a diagram illustrating an example of the detection value and the compensated value output by the digital LPF the parameter of which is adjusted by the second embodiment, in the case that electrical discharge machining is carried out on the machining path including the outer corner shape;

[FIG. 11] FIG. 11 is a diagram for describing another example of a smoothing process using a digital LPF;

[FIG. 12] FIG. 12 is a diagram showing an example of a machining path having an inner corner shape;

[FIG. 13] FIG. 13 is a diagram schematically showing a discharge pulse having a predetermined discharge pulse width and a predetermined discharge power;

[FIG. 14] FIG. 14 is a block diagram of a control device according to a third modification;

[FIG. 15] FIG. 15 is a flowchart illustrating an example of a processing sequence in relation to a machining control of the electrical discharge machining by the control device of the third modification;

[FIG. 16] FIG. 16 is a flowchart illustrating an example of a processing sequence of a first preliminary determination;

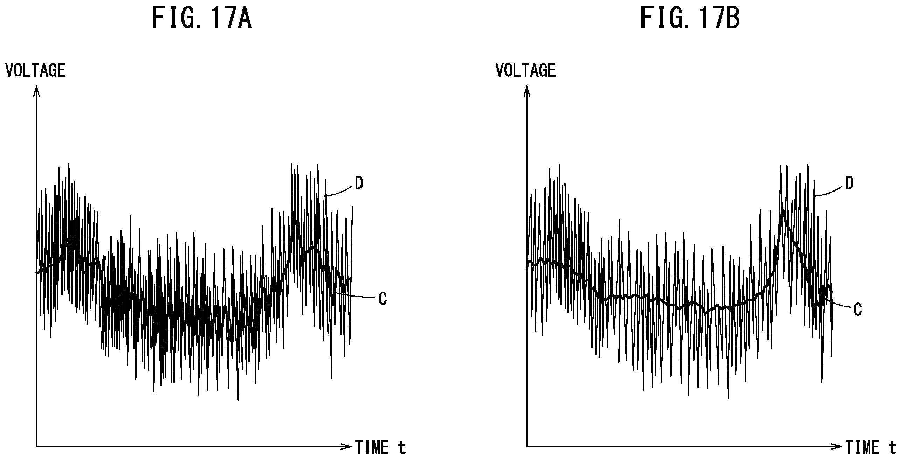

[FIG. 17] FIG. 17A is a diagram illustrating an example of the detection value, and the compensated value output by the digital LPF the parameter of which is not adjusted, in the case that electrical discharge machining is carried out on the machining path including an inner corner segment, and FIG. 17B is a diagram illustrating an example of the detection value, and the compensated value output by the digital LPF the parameter of which is adjusted by the third modification, in the case that electrical discharge machining is carried out on the machining path including the inner corner segment;

[FIG. 18] FIG. 18 is a block diagram of the control device according to a fourth modification;

[FIG. 19] FIG. 19 is a flowchart illustrating an example of a processing sequence in relation to a machining control of electrical discharge machining by the control device of the fourth modification; and

[FIG. 20] FIG. 20 is a flowchart illustrating an example of a processing sequence of a second preliminary determination.

## DETAILED DESCRIPTION OF THE INVENTION

A machining voltage (cutting volt) at the time of electrical discharge machining is detected, and an electrical discharge machining control is carried out using a detection value thereof. Such a detection value contains noise. Therefore, a compensated value obtained by reducing the noise contained in the detection value by a filter is used in the electrical discharge machining control. However, if the degree of noise removal by the filter is inappropriate, there is a possibility that the electrical discharge machining may not be stable.

(First Embodiment)

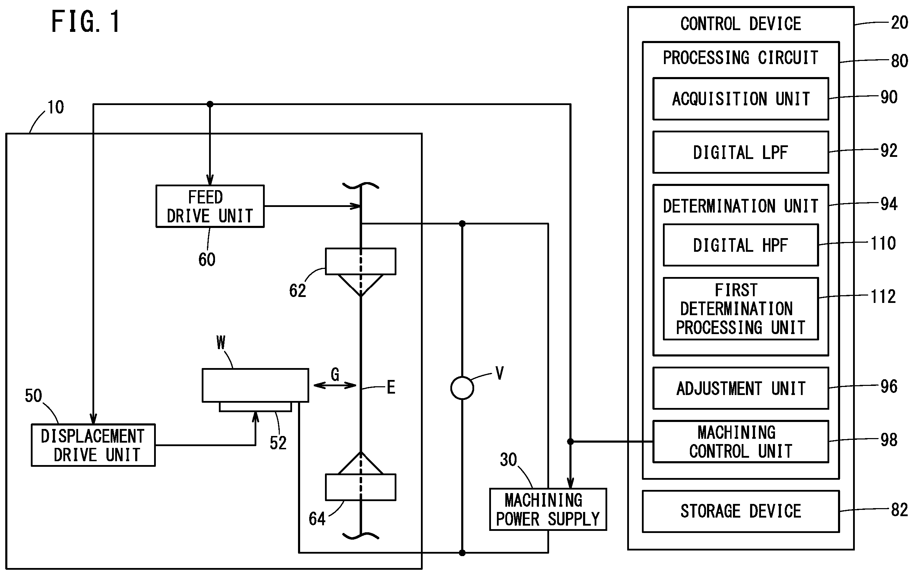

FIG. 1 is a block diagram showing a wire electrical discharge machine 10, and a control device 20 for the wire electrical discharge machine according to a first embodiment. The control device 20 for the wire electrical discharge machine 10 controls the wire electrical discharge machine 10, to cause the wire electrical discharge machine 10 to carry out electrical discharge machining on a workpiece (an object to be machined) W. In the wire electrical discharge machine 10 of FIG. 1, only a portion of the configuration in relation to the electrical discharge machining of the workpiece W is shown.

The wire electrical discharge machine 10 generates electrical discharge by applying a machining voltage to an electrode gap G between a wire electrode E and the workpiece W, while the wire electrode E and the workpiece W are made to move relatively along the machining path. The application of the machining voltage to the electrode gap G is carried out by a machining power supply 30. The wire electrical discharge machine 10, by generating an electrical discharge in the electrode gap G, carries out the electrical discharge machining on the workpiece W. The machining voltage applied to the electrode gap G is detected by a voltage sensor V.

The wire electrical discharge machine 10 includes a displacement drive unit 50, a table 52, a feed drive unit 60, an upper wire guide 62, and a lower wire guide 64. The displacement drive unit 50 includes a motor and a drive transmission mechanism, neither of which are shown. The drive transmission mechanism converts a rotational motion of the motor into a linear motion. The drive transmission mechanism, for example, is a ball screw and a nut or the like. The workpiece W is supported by the table 52. Relative movement between the wire electrode E and the workpiece W is carried out, for example, by the displacement drive unit 50 causing the table 52 to move.

The wire electrode E is supported by the upper wire guide 62 and the lower wire guide 64. The feed drive unit 60 includes a motor and a roller, neither of which are shown. The motor rotates the roller, and thereby causes the roller to feed the wire electrode E at a predetermined speed. The wire electrode E is fed from the upper wire guide 62 to the lower wire guide 64. The wire electrode E, at a position between the upper wire guide 62 and the lower wire guide 64, forms an electrode gap G between the workpiece W and the wire electrode E.

The control device 20 includes a processing circuit 80, and a storage device 82. The processing circuit 80 includes a processor such as a CPU or a GPU or the like. The storage device 82 includes a volatile memory such as a RAM or the like, and a non-volatile memory such as a ROM or a flash memory or the like. The volatile memory is used as the working memory of the processor. The non-volatile memory stores programs that are executed by the processor and other necessary data. The storage device 82 also stores a machining program used for electrical discharge machining.

The processing circuit 80 includes an acquisition unit 90, a digital LPF (digital low pass filter) 92, a determination unit 94, an adjustment unit 96, and a machining control unit 98. By the processing circuit 80 executing a program stored in the storage device 82, the acquisition unit 90, the digital LPF 92, the determination unit 94, the adjustment unit 96, and the machining control unit 98 are realized. At least a portion of the acquisition unit 90, the digital LPF 92, the determination unit 94, the adjustment unit 96, and the machining control unit 98 may be realized by an integrated circuit such as an ASIC or an FPGA or the like, or an electronic circuit including a discrete device.

The acquisition unit 90 acquires a detection value D of the machining voltage from the voltage sensor V. Noise is generated at the time of electrical discharge machining. The digital LPF 92 compensates the acquired detection value D by removing noise (for example, white noise) from the detection value D. The digital LPF 92 outputs a compensated value C obtained by compensating the detection value D of the machining voltage.

The determination unit 94 carries out, on the basis of the detection value D and the compensated value C, a first determination to determine the degree of noise removal by the digital LPF 92. The determination unit 94 includes a digital HPF (digital high pass filter) 110, and a first determination processing unit 112. The digital HPF 110 allows, in an interval of a predetermined sampling time, frequency components in a high-frequency band that includes a frequency band higher than the passband of the digital LPF 92, from the detection value D and the compensated value C, to pass therethrough. Stated otherwise, the digital HPF 110 extracts frequency components in the high frequency band (high-frequency components).

The digital HPF 110 outputs as a first output value HD a high frequency component extracted from the detection value D. The digital HPF 110 outputs as a second output value HC a high frequency component extracted from the compensated value C. The first determination processing unit 112 carries out the aforementioned first determination, based on an amplitude X of the first output value HD and an amplitude Y of the second output value HC. More specifically, the first determination processing unit 112 determines the degree of noise removal by the digital LPF 92, on the basis of the amplitude X of the first output value HD and the amplitude Y of the second output value HC.

The adjustment unit 96 adjusts a parameter of the digital LPF 92, based on the determination result of the first determination processing unit 112 of the determination unit 94. By the parameter being adjusted, the degree of noise removal by the digital LPF 92 changes. For example, in the first determination by the first determination processing unit 112, in the case that the degree of noise removal by the digital LPF 92 is determined to be weak, the adjustment unit 96 adjusts the parameter, and thereby strengthens the degree of noise removal.

The machining control unit 98 reads out the machining path from a machining program that is stored in the storage device 82. The machining control unit 98 controls the displacement drive unit 50, and thereby causes the wire electrode E and the workpiece W to move relatively along the machining path. The machining control unit 98 controls the feed drive unit 60 and thereby causes the feed drive unit to feed the wire electrode E from the upper wire guide 62 to the lower wire guide 64. The machining control unit 98 controls the machining power supply 30, and thereby causes the electrical discharge to be generated in the electrode gap G. Consequently, the wire electrical discharge machine 10 is capable of carrying out electrical discharge machining on the workpiece W.

The machining control unit 98 controls the electrical discharge machining based on the compensated value C. Specifically, based on the compensated value C, the machining control unit 98 controls at least one of the relative speed between the wire electrode E and the workpiece W, or the discharge power. The relative speed and the discharge power are changed to values in accordance with, for example, the shape of the machining path, or the machining conditions of the electrical discharge machining.

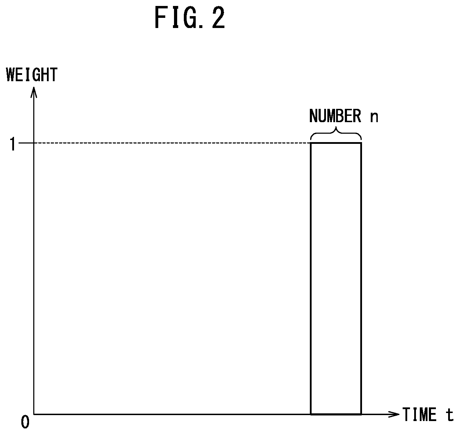

FIG. 2 is a diagram for describing an example of a smoothing process using the digital LPF 92. In the smoothing process, the detection value D(t) of the machining voltage acquired at time t is compensated by Equation (1), and a compensated value C(t) is output. According to the Equation (1), the compensated value C(t) is an average value of a predetermined number n of the detection values D that were acquired in the past at a predetermined time interval i. Stated otherwise, the compensated value C(t) is obtained by multiplying each of the n values, i.e., each of the past detection values D(k) = D(t), D(t-i), ..., D(t-i×(n-1)), by an equal weight of 1, summing the results, and dividing the sum by the predetermined number n.

$$C(t) = \frac{1}{n} \sum_{k=t-i\times(n-1)}^{t} D(k) \qquad \qquad ...(1)$$

Each time that the detection value D(t) is acquired along with the passage of time t, by way of the Equation (1), the average value of the predetermined number n past detection values D is calculated. The digital LPF 92 outputs the calculated average value of the detection values D as the compensated value C(t) corresponding to the detection value D(t) acquired at time t. Accordingly, the digital LPF 92 serves as a moving average filter. The predetermined number n is a parameter of the digital LPF 92. The adjustment unit 96 adjusts the predetermined number n based on a determination result of the first determination processing unit 112.

The adjustment unit 96, by increasing the predetermined number n, is capable of strengthening the degree of the smoothing process. By the smoothing process, high frequency noise is removed. More specifically, the adjustment unit 96, by increasing the predetermined number n, is capable of strengthening the degree of noise removal by the digital LPF 92.

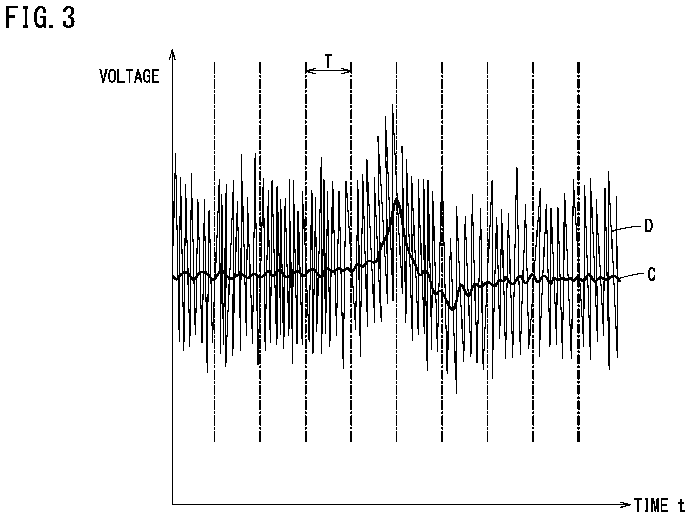

FIG. 3 is a diagram illustrating a detection value D of the machining voltage, and a compensated value C of the detection value D. FIG. 3 shows how the detection value D and the compensated value C change along with the passage of time t. In the example shown in FIG. 3, the detection value D contains a large amount of noise. This noise is derived mainly from white noise generated at the time of electrical discharge machining, and is made up from frequency components over a wide band. The digital HPF 110 outputs, in an interval of a predetermined sampling time T, high frequency components from the detection value D and the compensated value C, respectively as a first output value HD and a second output value HC.

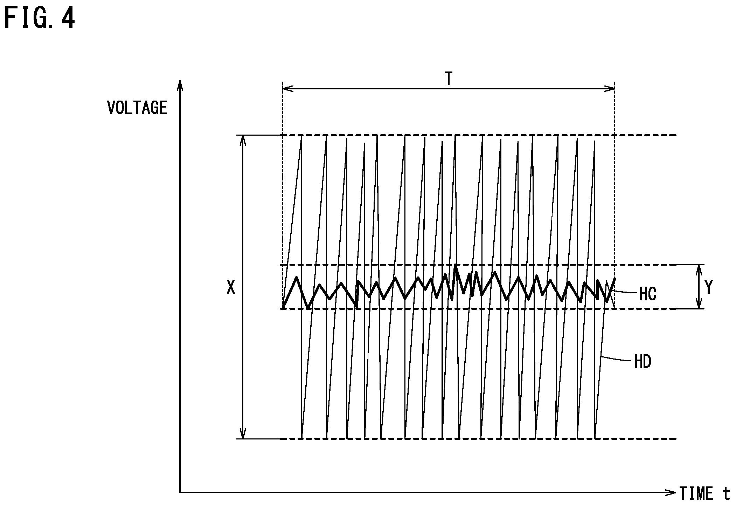

FIG. 4 is a diagram showing the first output value HD and the second output value HC which are output, respectively, based on the detection value D and the compensated value C. FIG. 4 shows how the first output value HD and the second output value HC oscillate along with the passage of time t. The first determination processing unit 112, at the sampling time T, carries out the aforementioned first determination, based on the amplitude Y of the second output value HC with respect to the amplitude X of the first output value HD, and a first predetermined value A. Specifically, the first determination is carried out using Equation (2).

$$Y/X \geq A \qquad\qquad\qquad \dots (2)$$

In the case that the Equation (2) is satisfied in the first determination, the compensated value C is considered to contain a large amount of noise. As noted previously, based on the compensated value C, at least one of the relative speed between the wire electrode E and the workpiece W, or the discharge power is controlled. Accordingly, in the case that the compensated value C contains a large amount of noise, the electrical discharge machining may become unstable. In such a case, the processing accuracy decreases. Accordingly, it is preferable, by strengthening the degree of noise removal by the digital LPF 92, to reduce the noise in the compensated value C.

In the first determination, the first determination processing unit 112 compares a ratio Y/X of the amplitude Y of the second output value HC to the amplitude X of the first output value HD, with the first predetermined value A. In the case that the ratio Y/X is greater than or equal to the first predetermined value A (in the case that the Equation (2) is satisfied), the first determination processing unit 112 determines that the degree of noise removal by the digital LPF 92 is weak. In the first determination, in the case that the degree of noise removal by the digital LPF 92 is determined to be weak, the adjustment unit 96 increases the predetermined number n that is included in the Equation (1).

In this manner, the adjustment unit 96 increases the degree of noise removal by the digital LPF 92. The detection value D next acquired is compensated by the digital LPF 92 in which the degree of noise removal has become stronger. In this manner, the noise contained in the compensated value C output from the digital LPF 92 is reduced.

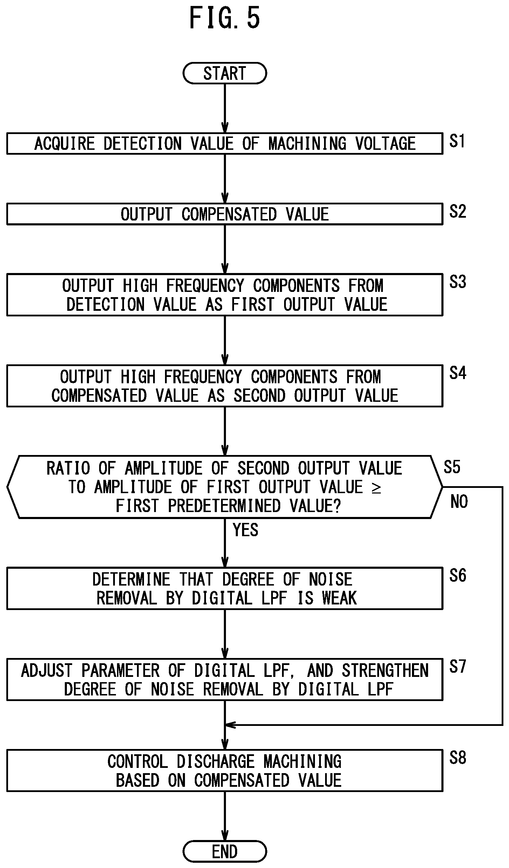

FIG. 5 is a flowchart illustrating an example of a processing sequence in relation to a machining control of the electrical discharge machining by the control device 20 of the first embodiment. The present processing sequence is periodically carried out, for example, by the processing circuit 80 of the control device 20. When this processing sequence is started, in step S1, the acquisition unit 90 acquires the detection value D of the machining voltage from the voltage sensor V.

In step S2, by removing noise from the detection value D acquired in step S1, the digital LPF 92 compensates the detection value D. The digital LPF 92 outputs a compensated value C obtained by compensating the detection value D.

In step S3, the digital HPF 110 of the determination unit 94 extracts, from the detection value D, a high frequency component in the high frequency band. The digital HPF 110 outputs as the first output value HD the high frequency component extracted from the detection value D.

In step S4, the digital HPF 110 of the determination unit 94 extracts, from the compensated value C, a high frequency component in the high frequency band. The digital HPF 110 outputs as a second output value HC the high frequency component extracted from the compensated value C.

In step S5, the first determination processing unit 112 determines whether or not the ratio of the amplitude Y of the second output value HC to the amplitude X of the first output value HD is greater than or equal to the first predetermined value A. In the case that the answer in step S5 has become YES, the present processing sequence proceeds to step S6. In the case that the answer has become NO in step S5, the present processing sequence proceeds to step S8.

In step S6, the first determination processing unit 112 determines that the degree of noise removal by the digital LPF 92 is weak. In step S7, the adjustment unit 96 adjusts the parameter of the digital LPF 92, and thereby strengthens the degree of noise removal by the digital LPF 92. In the case that the smoothing process (refer to FIG. 2) expressed by the Equation (1) is carried out by the digital LPF 92, the adjustment unit 96 adjusts, as a parameter of the digital LPF 92, the predetermined number n included in the Equation (1). In the adjustment of the predetermined number n, the adjustment unit 96 makes the predetermined number n larger.

In step S8, the machining control unit 98 controls the electrical discharge machining based on the compensated value C. Moreover, after the process of step S7, by a process similar to that of step S2 being carried out, a new compensated value C may be output by the digital LPF 92 after the parameter adjustment. In such a case, in the next step S8, the electrical discharge machining is controlled based on the new compensated value C. When the process of step S8 is completed, the present processing sequence comes to an end.

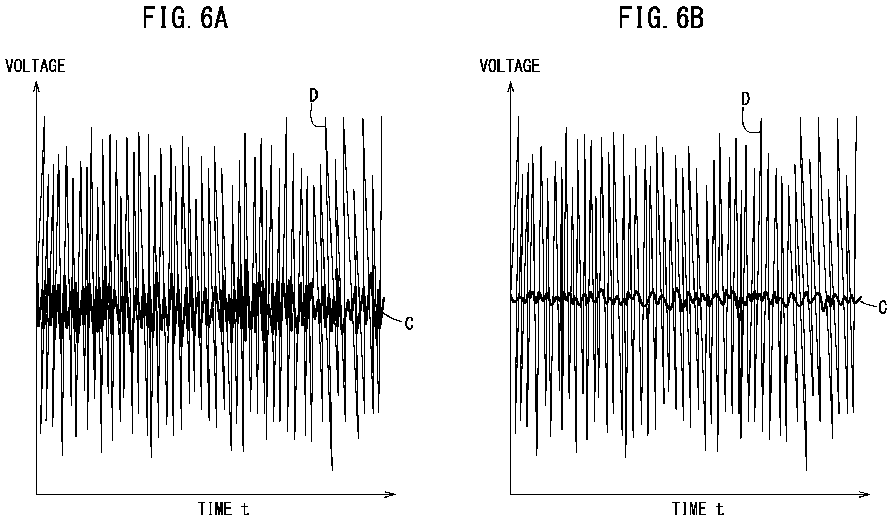

FIG. 6A is a diagram illustrating the detection value D of the machining voltage, and the compensated value C of the detection value D output by the digital LPF 92 in the case that the parameter is not adjusted. FIG. 6B is a diagram illustrating the detection value D of the machining voltage, and the compensated value C of the detection value D output by the digital LPF 92 in the case that the parameter is adjusted according to the present embodiment. FIG. 6A and FIG. 6B both show variation of the machining voltage with respect to time t.

Variation in the magnitude of the detection value D shown in FIG. 6A and FIG. 6B is large. However, variation in the magnitude of the compensated value C shown in FIG. 6B is more suppressed than variation in the magnitude of the compensated value C shown in FIG. 6A. According to the present embodiment, even in the case that the noise generated by the electrical discharge machining is large, the electrical discharge machining is carried out in a stable manner. Therefore, high machining accuracy can be maintained.


(Second Embodiment)


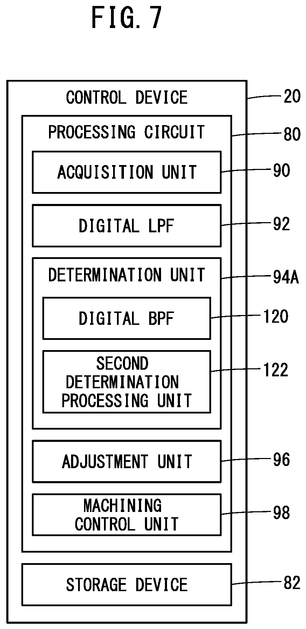

FIG. 7 is a block diagram showing a control device 20 according to a second embodiment. Concerning the present embodiment, descriptions of contents that are common with those of the first embodiment will be omitted. The processing circuit 80 of the control device 20 according to the present embodiment has a determination unit 94A instead of the determination unit 94 in the first embodiment.

The determination unit 94A carries out, on the basis of the detection value D and the compensated value C described above, a second determination to determine a response delay of the digital LPF 92. The determination unit 94A includes a digital BPF (a digital band pass filter) 120, and a second determination processing unit 122. The digital BPF 120 allows, in an interval of a predetermined sampling time, frequency components in a predetermined frequency band, from the detection value D and the compensated value C, to pass therethrough, wherein the predetermined frequency band includes a frequency band that is determined in advance, in accordance with the passband of the digital LPF 92. Stated otherwise, the digital BPF 120 extracts frequency components (predetermined frequency components) in the predetermined frequency band.

The aforementioned predetermined frequency band is a frequency band that is slightly higher than the passband of the digital LPF 92. At least a portion of the predetermined frequency band may overlap with the passband of the digital LPF 92.

The digital BPF 120 outputs as a third output value MD a predetermined frequency component extracted from the detection value D. The digital BPF 120 outputs as a fourth output value MC a predetermined frequency component extracted from the compensated value C. The second determination processing unit 122 carries out the aforementioned second determination based on the difference between the third output value MD and the fourth output value MC. More specifically, the second determination processing unit 122 determines the response delay of the digital LPF 92, on the basis of the third output value MD and the fourth output value MC.

The adjustment unit 96 adjusts a parameter of the digital LPF 92, based on the determination result of the second determination processing unit 122 of the determination unit 94A. By the parameter being adjusted, the response delay of the digital LPF 92 changes. For example, in the second determination by the second determination processing unit 122, in the case that the response delay of the digital LPF 92 is determined to be long, the adjustment unit 96 adjusts the parameter, and thereby shortens the response delay.

The parameter of the digital LPF 92 that is adjusted by the adjustment unit 96, similar to the first embodiment, is the predetermined number n included in the Equation (1). The adjustment unit 96 adjusts the predetermined number n based on a determination result of the second determination processing unit 122. The adjustment unit 96, by making the predetermined number n smaller, is capable of shortening the response delay of the digital LPF 92.

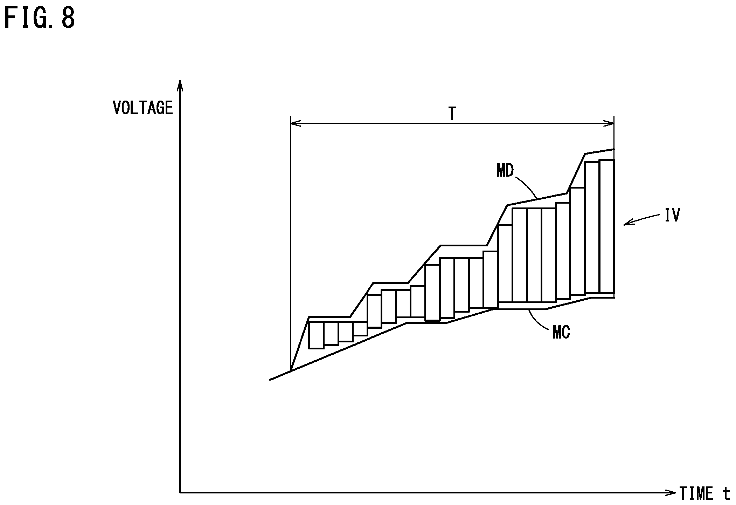

The digital BPF 120 outputs, in an interval of the predetermined sampling time T shown in FIG. 3, predetermined frequency components from the detection value D and the compensated value C, respectively as a third output value MD and a fourth output value MC. FIG. 8 is a diagram showing the third output value MD and the fourth output value MC which are output respectively based on the detection value D and the compensated value C.

FIG. 8 shows how the third output value MD and the fourth output value MC oscillate along with the passage of time t. The second determination processing unit 122, at the predetermined sampling time T, carries out the aforementioned second determination, based on a difference between the third output value MD and the fourth output value MC, and the second predetermined value B. Specifically, the second determination is carried out using Equation (3). The left side of the Equation (3) represents an integral value IV obtained by integrating the absolute value of the difference between the third output value MD and the fourth output value MC over the predetermined sampling time T of the digital BPF 120.

$$\int_T |MC - MD| dt \geq B \qquad\qquad \dots (3)$$

The Equation (3) being satisfied in the second determination indicates that a deviation between variation of the detection value D and the compensated value C is large. In such a case, it is considered that the response delay of the digital LPF 92 is long. As noted previously, the electrical discharge machining control is carried out based on the compensated value C. Accordingly, in the case that the response delay of the digital LPF 92 is long, the electrical discharge machining control is delayed. As a result, the electrical discharge machining may become unstable. In such a case, the processing accuracy decreases. Accordingly, it is preferable to shorten the response delay of the digital LPF 92.

The second determination processing unit 122, in the second determination, integrates the absolute value of the difference between the third output value MD and the fourth output value MC over the predetermined sampling time T of the digital BPF 120, and thereby obtains the integral value IV. In the case that the integral value IV is greater than or equal to the second predetermined value B (in the case that the Equation (3) is satisfied), the second determination processing unit 122 determines that the response delay of the digital LPF 92 is long. In the second determination, in the case that the response delay of the digital LPF 92 is determined to be long, the adjustment unit 96 makes the predetermined number n included in the Equation (1) smaller.

In this manner, the adjustment unit 96 shortens the response delay of the digital LPF 92. The detection value D that is next acquired is compensated by the digital LPF 92, the response delay of which has become shortened. In this manner, the response delay of the digital LPF 92 that outputs the compensated value C is shortened.

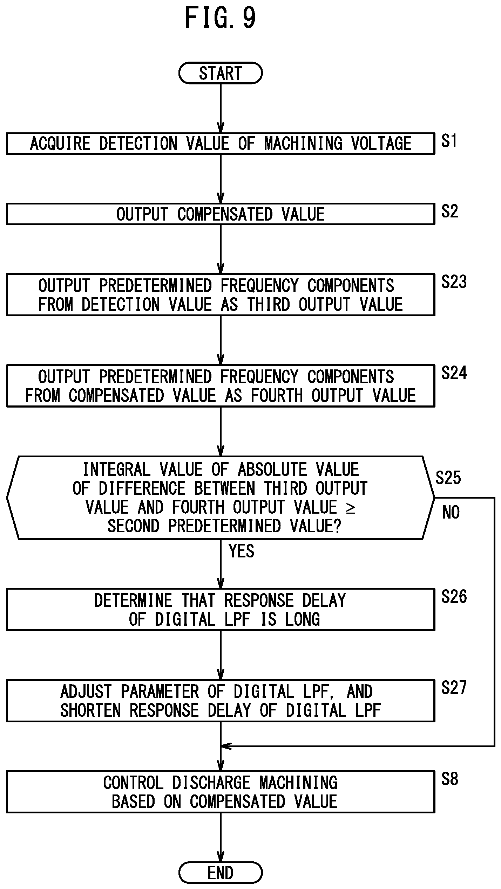

FIG. 9 is a flowchart illustrating an example of a processing sequence in relation to a machining control of the electrical discharge machining by the control device 20 of the second embodiment. The present processing sequence is periodically carried out, for example, by the processing circuit 80 of the control device 20. The reference numerals assigned to the steps of the present processing sequence shown in FIG. 9 partially coincide with the reference numerals assigned to the steps of the processing sequence shown in FIG. 5. In steps whose reference numerals coincide, the same processes are performed, and therefore, descriptions of the processes in those steps will be omitted.

When the process of step S2 is completed, then in step S23, the digital BPF 120 of the determination unit 94A extracts, from the detection value D, a predetermined frequency component in a predetermined frequency band. The digital BPF 120 outputs as a third output value MD the predetermined frequency component extracted from the detection value D.

In step S24, the digital BPF 120 of the determination unit 94A extracts, from the compensated value C, a predetermined frequency component in the predetermined frequency band. The digital BPF 120 outputs as a fourth output value MC the predetermined frequency component extracted from the compensated value C.

In step S25, the second determination processing unit 122 determines whether or not the integral value IV obtained by integrating the absolute value of the difference between the third output value MD and the fourth output value MC is greater than or equal to the second predetermined value B. In the case that the answer has become YES in step S25, the present processing sequence proceeds to step S26. In the case that the answer has become NO in step S25, the present processing sequence proceeds to step S8.

In step S26, the second determination processing unit 122 determines that the response delay of the digital LPF 92 is long. In step S27, the adjustment unit 96 adjusts the parameter of the digital LPF 92, and thereby shortens the response delay of the digital LPF 92. In the case that the smoothing process (refer to FIG. 2) expressed by the Equation (1) is carried out by the digital LPF 92, the adjustment unit 96 adjusts, as a parameter of the digital LPF 92, the predetermined number n included in the Equation (1). In the adjustment of the predetermined number n, the adjustment unit 96 makes the predetermined number n smaller.

When the process of step S27 is completed, the present processing sequence proceeds to step S8. Moreover, after the process of step S27, by a process similar to that of step S2 being carried out, a new compensated value C may be output by the digital LPF 92 after the parameter adjustment. In such a case, in the next step S8, the electrical discharge machining is controlled based on the new compensated value C. When the process of step S8 is completed, the present processing sequence comes to an end.

FIG. 10A is a diagram showing an example of a machining path RT having an outer corner shape. The machining path RT in FIG. 10A includes a path segment RA having an outer corner shape which is not a straight-shaped path segment. The shape of the path segment RA is a curved outer corner shape. The workpiece W is positioned on the inner side of the curve. When the electrical discharge machining is carried out along the path segment RA, the workpiece W is machined into a convex shape. Moreover, in the present specification, the curved shape includes an arched shape, and a shape obtained by a straight line being bent.

The wire electrical discharge machine 10 generates electrical discharge by applying a machining voltage to the electrode gap G, while the wire electrode E and the workpiece W are made to move relatively along the machining path RT. The amount of machining in the path segment RA having the outer corner shape is smaller than that of the straight-shaped path segment. Accordingly, in the case that the relative position of the wire electrode E has reached the path segment RA of the outer corner shape, it is preferable to raise the relative movement speed between the wire electrode E and the workpiece W quickly. Alternatively, it is preferable to reduce the discharge power of the electrical discharge generated in the electrode gap G promptly. For this purpose, it is preferable to be capable of quickly detecting that the relative position of the wire electrode E has reached the path segment RA of the outer corner shape.

FIG. 10B is a diagram illustrating an example of the detection value D, and the compensated value C output by the digital LPF 92 the parameter of which is not adjusted, in the case that electrical discharge machining is carried out along the machining path RT including the outer corner path segment. FIG. 10C is a diagram illustrating an example of the detection value D, and the compensated value C output by the digital LPF 92 the parameter of which is adjusted according to the present embodiment, in the case that electrical discharge machining is carried out along the machining path RT including the outer corner path segment. FIG. 10B and FIG. 10C both show variation of the machining voltage with time t.

As shown in FIG. 10B and FIG. 10C, there is a time period during which the detection value D increases. This time period is a time period during which the relative position of the wire electrode E moves along the path segment RA of the outer corner shape. In the path segment RA of the outer corner shape, since the frequency of occurrence of electrical discharge decreases, the detection value D of the machining voltage rises. In the case that the detection value D has risen, based on the compensated value C of the detection value D, the machining control unit 98 controls at least one of the relative speed between the wire electrode E and the workpiece W, or the discharge power.

However, in the case that the response delay of the digital LPF 92 is long, as shown in FIG. 10B, after the detection value D has risen, the compensated value C starts to rise later than the detection value D. Accordingly, in the case that the parameter of the digital LPF 92 is not adjusted, electrical discharge machining control based on the compensated value C by the machining control unit 98 is also delayed. In the case that the outer corner shape of the path segment RA is of a shape formed by a straight line being bent, the response delay of the digital LPF 92 becomes more noticeable in comparison with in case of an arched shape.

In the present embodiment, when it is determined that the response delay of the digital LPF 92 is long, the adjustment unit 96 adjusts the parameter of the digital LPF 92, and thereby shortens the response delay of the digital LPF 92. In such a case, as shown in FIG. 10C, following the rise in the detection value D, the compensated value C promptly rises. Accordingly, in the case that the parameter of the digital LPF 92 is adjusted, the electrical discharge machining control based on the compensated value C by the machining control unit 98 can be improved. The electrical discharge machining is carried out in a stable manner, and high machining accuracy can be maintained.

[Exemplary Modifications]

Each of the above-described respective embodiments may be modified in the following manner.

(Modification 1)

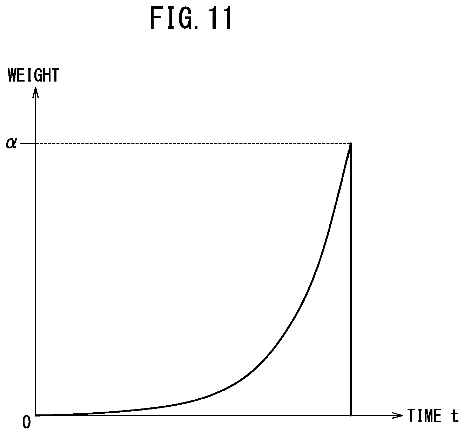

In the smoothing process by the digital LPF 92 in the first embodiment and the second embodiment, exponential smoothing may be used. FIG. 11 is a diagram for describing another example of the smoothing process by the digital LPF 92. In this smoothing process, the detection value D(t) of the machining voltage acquired at time t is compensated according to the Equation (4), and the compensated value C(t) is output. The compensated value C(t) is a weighted average value of a value obtained by multiplying the detection value D(t) at time t by a weight $\alpha$ ($0 \leq \alpha \leq 1$), and a value obtained by multiplying the previous compensated value C(t-i) obtained at time t-i by a weight 1-$\alpha$. Stated otherwise, according to the Equation (4), the compensated value C(t) is a weighted average value of the detection values D that were acquired in the past at the predetermined time intervals i.

$$C(t) = \alpha \times D(t) + (1-\alpha) \times C(t-i) \qquad \ldots (4)$$

Each time that the detection value D(t) is acquired along with the passage of time t, the weighted average value of the past detection values D is calculated using the detection value D(t), the previously detected compensated value C(t-i), and the weight α, according to the Equation (4). The digital LPF 92 outputs the calculated weighted average value of the detection values D as the compensated value C(t) corresponding to the detection value D(t) acquired at time t. Accordingly, the digital LPF 92 serves as a weighted average filter. The weight α is a parameter of the digital LPF 92.

The adjustment unit 96 adjusts the weight α based on the determination result of the first determination processing unit 112 or the second determination processing unit 122. The adjustment unit 96, by making the weight α smaller, is capable of strengthening the degree of noise removal by the digital LPF 92. The adjustment unit 96, by making the weight α larger, is capable of shortening the response delay of the digital LPF 92. According to the present modification, the performance of the digital LPF 92 can be adjusted relatively easily.

(Modification 2)

The parameter adjustments of the digital LPF 92 in the first embodiment and the second embodiment may be carried out together. In such a case, the first determination and the second determination are carried out based on the detection value D of the machining voltage and the compensated value C of the detection value D.

In the case that it is determined in the first determination that the degree of noise removal by the digital LPF 92 is weak, the adjustment unit 96 adjusts the parameter of the digital LPF 92, and thereby strengthens the degree of noise removal of the digital LPF 92. In the case that it is determined in the second determination that the response delay of the digital LPF 92 is long, the adjustment unit 96 adjusts the parameter of the digital LPF 92, and thereby shortens the response delay of the digital LPF 92.

When the degree of noise removal of the digital LPF 92 is strengthened, the response delay of the digital LPF 92 becomes longer. If the response delay of the digital LPF 92 is shortened, the degree of noise removal by the digital LPF 92 becomes weaker. By the adjustment unit 96 adjusting the parameters of the digital LPF 92, the degree of noise removal and the response delay of the digital LPF 92 can be appropriately controlled. More specifically, the noise in the detection value D is appropriately removed, and further, lengthening of the response delay of the digital LPF 92 is prevented. Therefore, according to the present modification, the electrical discharge machining is carried out in a more stable manner. Therefore, high machining accuracy can be maintained.

(Modification 3)

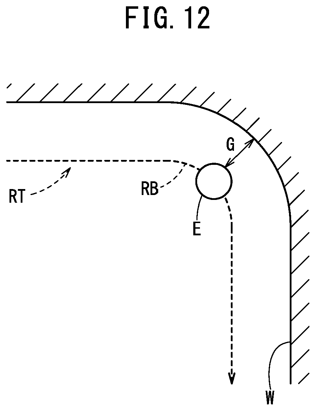

In the first embodiment, the first predetermined value A included in the Equation (2) that is used in the first determination may be changed in accordance with the machining shape and the machining conditions. FIG. 12 is a diagram showing an example of the machining path RT having an inner corner shape. The machining path RT in FIG. 12 includes a path segment RB that is not a straight-shaped path segment but is of an inner corner shape. The shape of the path segment RB is a curved inner corner shape. The workpiece W is positioned on the outer side of the curve. When electrical discharge machining is carried out along the path segment RB, the workpiece W is machined into a concave shape.

The wire electrical discharge machine 10 generates electrical discharge by applying a machining voltage to the electrode gap G, while the wire electrode E and the workpiece W are made to move relatively along the machining path RT. The amount of machining in the path segment RB having the inner corner shape is greater than that of the straight-shaped path segment. The noise generated at the time of electrical discharge machining also tends to become stronger. In the case that the degree of noise removal by the digital LPF 92 is weak, when the machining control is carried out based on the compensated value C that is output from the digital LPF 92, the amount of machining may be insufficient.

Further, due to the insufficiency of the machining amount, there is also a possibility that hunting of the wire electrode E may occur. In such a case, the detection value D of the machining voltage can oscillate. In particular, in the case that the discharge power is small, and further, the discharge pulse width is also small, hunting of the wire electrode E is likely to occur in the path segment RB of the inner corner shape.

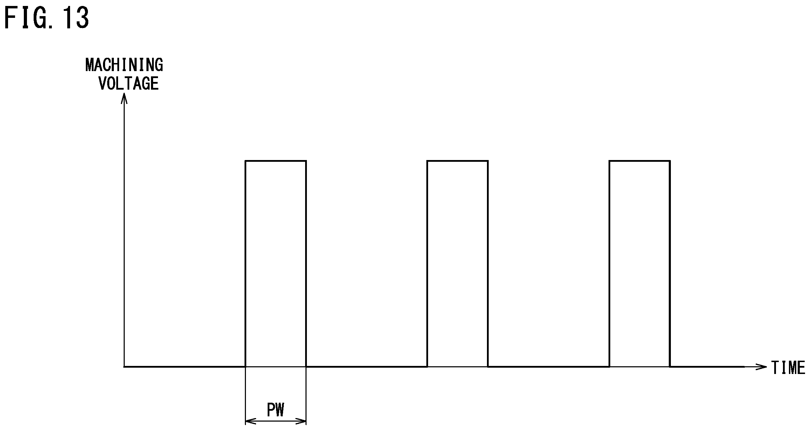

FIG. 13 is a diagram schematically showing a discharge pulse having a predetermined discharge pulse width PW and a predetermined discharge power. The predetermined discharge pulse width PW corresponds to the width of each of periodic discharge pulses on the time axis. The predetermined discharge power is determined in accordance with the machining voltage that is periodically applied to the electrode gap G.

In the case that the machining shape is an inner corner shape, and further, a predetermined condition in relation to the machining conditions based on the discharge pulse width PW and the discharge power is satisfied, it is necessary to increase the degree of noise removal by the digital LPF 92.

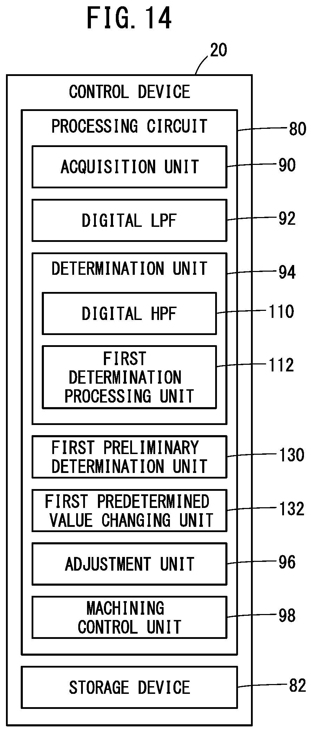

FIG. 14 is a block diagram of the control device 20 according to a third modification. Concerning the present modification, descriptions of contents that are common with those of the first embodiment will be omitted. The processing circuit 80 of the control device 20 according to the present modification further includes a first preliminary determination unit 130 and a first predetermined value changing unit 132. The first preliminary determination unit 130 and the first predetermined value changing unit 132 as well are realized by the processing circuit 80 executing programs that are stored in the storage device 82.

In the case that the shape of the machining path RT is an inner corner shape and that the predetermined conditions in relation to the machining conditions are satisfied, the first preliminary determination unit 130 determines that the degree of noise removal by the digital LPF 92 is weak. The predetermined conditions in relation to the machining conditions are expressed by Equation (5) and Equation (6). The Equation (5) indicates that the discharge power PR is smaller than a third predetermined value PR0. The Equation (6) indicates that the discharge pulse width PW is smaller than a fourth predetermined value PW0.

$$PR < PR0 \qquad \qquad ...(5)$$

$$PW < PW0 \qquad \qquad ...(6)$$

In the case that the first preliminary determination unit 130 determines that the degree of noise removal by the digital LPF 92 is weak, the first predetermined value changing unit 132 decreases the first predetermined value A in the Equation (2). The first predetermined value A is decreased by a predetermined amount of decrease. Insofar as the electrode position of the wire electrode E is on the inner corner shaped path segment RB, and the two conditions expressed by the Equation (5) and the Equation (6) are satisfied, the first predetermined value A is repeatedly decreased until the Equation (2) is satisfied.

In the case that at least one of the two conditions expressed by the Equation (5) and the Equation (6) is no longer satisfied, the first predetermined value changing unit 132 sets the first predetermined value A to an initial value. Further, also in the case that the wire electrode E passes through the path segment RB and moves to the straight-shaped path segment, the first predetermined value changing unit 132 sets the first predetermined value A to the initial value.

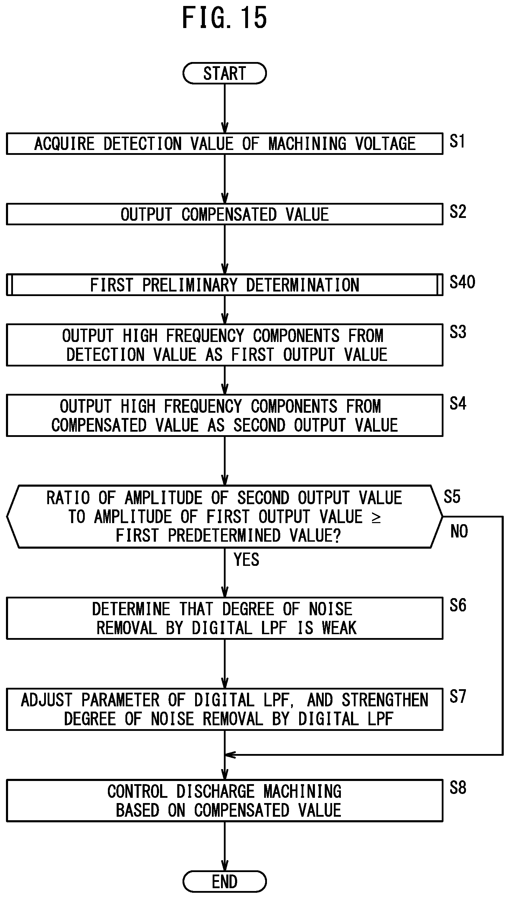

FIG. 15 is a flowchart illustrating an example of a processing sequence in relation to a machining control of the electrical discharge machining by the control device 20 of the third modification. The present processing sequence is periodically carried out, for example, by the processing circuit 80 of the control device 20. The reference numerals assigned to the steps of the present processing sequence shown in FIG. 15 partially coincide with the reference numerals assigned to the steps of the processing sequence shown in FIG. 5. In steps whose reference numerals coincide, the same processes are performed, and therefore, descriptions of the processes in those steps will be omitted.

When the process of step S2 is completed, a first preliminary determination process, which will be described later, is carried out in step S40. When the process of step S40 is completed, the present processing sequence proceeds to step S3. Concerning the processes of steps S3 to S8, such steps are as described with reference to FIG. 5. When the process of step S8 is completed, the present processing sequence comes to an end.

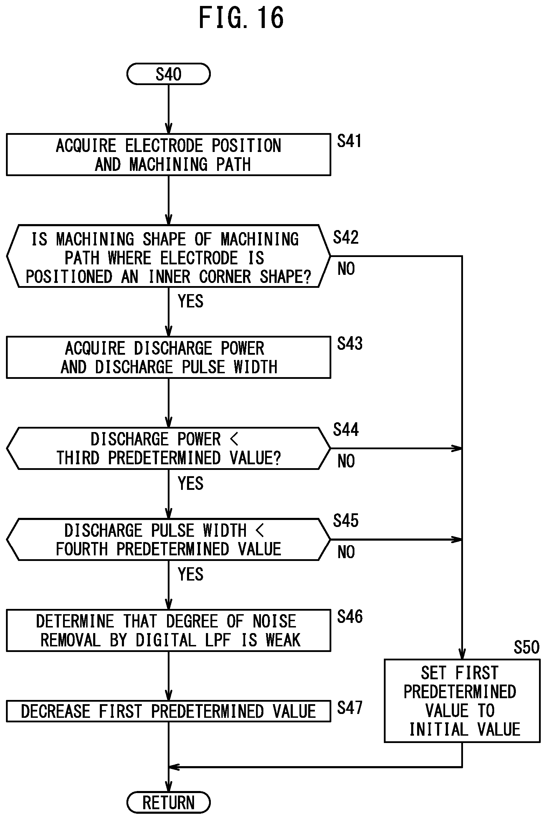

FIG. 16 is a flowchart illustrating an example of a processing sequence of the first preliminary determination. The first preliminary determination process is carried out in step S40 of FIG. 15. In step S41, the first preliminary determination unit 130 acquires from the machining control unit 98 the electrode position of the wire electrode E, and the machining path RT along which the wire electrode E moves. Moreover, the machining control unit 98 acquires the machining path RT by analyzing the machining program. Further, the machining control unit 98 acquires, from an encoder provided on a motor of the feed drive unit 60, the electrode position of the wire electrode E with respect to the workpiece W.

In step S42, the first preliminary determination unit 130 determines whether or not the machining shape of the machining path RT on which the electrode position is positioned is an inner corner shape. In the case that the electrode position is on the path segment RB of the inner corner shape, then the answer in step S42 becomes YES. In the case that the answer has become YES in step S42, the present processing sequence proceeds to step S43. In the case that the answer has become NO in step S42, the present processing sequence proceeds to step S50.

In step S43, the first preliminary determination unit 130 acquires from the machining control unit 98 the discharge power PR and the discharge pulse width PW. In step S44, the first preliminary determination unit 130 determines whether or not the discharge power PR acquired in step S43 is smaller than the third predetermined value PR0. In the case that the answer has become YES in step S44, the present processing sequence proceeds to step S45. In the case that the answer has become NO in step S44, the present processing sequence proceeds to step S50.

In step S45, the first preliminary determination unit 130 determines whether or not the discharge pulse width PW acquired in step S43 is smaller than the fourth predetermined value PW0. In the case that the answer has become YES in step S45, the present processing sequence proceeds to step S46. In the case that the answer has become NO in step S45, the present processing sequence proceeds to step S50.

In step S46, the first preliminary determination unit 130 determines that the degree of noise removal by the digital LPF 92 is weak. In step S47, the first predetermined value changing unit 132 decreases the first predetermined value A in the Equation (2) by a predetermined amount of decrease. When the process of step S47 is completed, the process of step S40 is completed. The present processing sequence proceeds to step S3 in FIG. 16. In step S5, the first determination of comparing the ratio of the amplitude Y of the second output value HC with respect to the amplitude X of the first output value HD with the first predetermined value A that has been decreased in step S47 is carried out by the first determination processing unit 112.

In step S50, the first predetermined value changing unit 132 sets the first predetermined value A in the Equation (2) to a predetermined initial value. When the process of step S50 is completed, the process of step S40 is completed. The present processing sequence proceeds to step S3 in FIG. 16.

FIG. 17A is a diagram illustrating an example of the detection value D, and the compensated value C output by the digital LPF 92 the parameter of which is not adjusted, in the case that electrical discharge machining is carried out along the machining path RT including the inner corner shape. FIG. 17B is a diagram illustrating an example of the detection value D, and the compensated value C output by the digital LPF 92 the parameter of which is adjusted, in the case that electrical discharge machining is carried out along the machining path RT including the inner corner shape. FIG. 17A and FIG. 17B both show variation of the machining voltage with time t.

A case is assumed in which, in the path segment RB of the inner corner shape shown in FIG. 12, the aforementioned hunting of the wire electrode E has occurred. FIG. 17A shows how the detection value D of the machining voltage oscillates. The compensated value C of the detection value D is subject to influence of the oscillation of the detection value D. In the present modification, as a result of the first predetermined value A of the Equation (2) being decreased, the parameter of the digital LPF 92 is adjusted, and the degree of noise removal is strengthened. Accordingly, as shown in FIG. 17B, the oscillation of the detection value D is suppressed, and the compensated value C is stabilized. Since the compensated value C is stabilized, the electrical discharge machining control carried out by the machining control unit 98 based on this compensated value C can be improved.

(Modification 4)

In the second embodiment, the second predetermined value B included in the Equation (3) that is used in the second determination may be changed in accordance with the machining shape and the machining conditions. The present modification will be described below with reference to the example of the machining path RT having the outer corner shape shown in FIG. 10A. The speed at which the wire electrode E and the workpiece W move relative to each other is determined by a PI control, based on the machining voltage and a proportional gain KP in the PI control. In the case that the machining shape is an outer corner shape, and a predetermined condition in relation to the machining conditions based on the proportional gain KP is satisfied, it is necessary to shorten the response delay of the digital LPF 92.

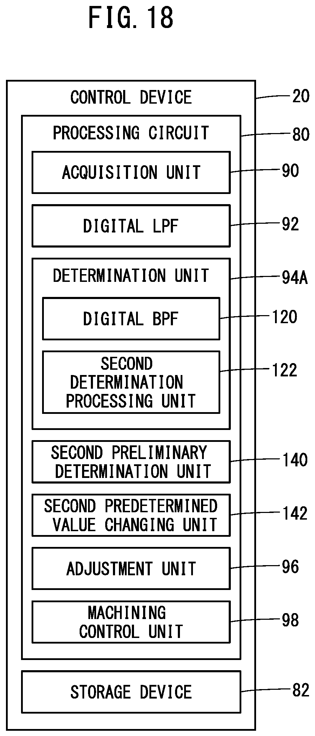

FIG. 18 is a block diagram of the control device 20 according to a fourth modification. Concerning the present modification, descriptions of contents that are common with those of the second embodiment will be omitted. The processing circuit 80 of the control device 20 according to the present modification further includes a second preliminary determination unit 140 and a second predetermined value changing unit 142. The second preliminary determination unit 140 and the second predetermined value changing unit 142 as well are realized by the processing circuit 80 executing programs that are stored in the storage device 82.

In the case that the shape of the machining path RT is an outer corner shape and that the predetermined condition in relation to the machining conditions is satisfied, the second preliminary determination unit 140 determines that the response delay of the digital LPF 92 is long. The predetermined condition in relation to the machining conditions is expressed by Equation (7). The Equation (7) indicates that the proportional gain KP is smaller than a fifth predetermined value KP0.

$$KP < KP0 \qquad\qquad ...(7)$$

In the case that the second preliminary determination unit 140 determines that the response delay of the digital LPF 92 is long, the second predetermined value changing unit 142 decreases the second predetermined value B in the Equation (3). The second predetermined value B is decreased by a predetermined amount of decrease. Insofar as the electrode position of the wire electrode E is on the outer corner shaped path segment RA, and the condition expressed by the Equation (7) is satisfied, the second predetermined value B is repeatedly decreased until the Equation (3) is satisfied.

In the case that the condition expressed by the Equation (7) is no longer satisfied, the second predetermined value changing unit 142 sets the second predetermined value B to an initial value. Further, also in the case that the wire electrode E passes through the path segment RA and moves to the straight-shaped path segment, the second predetermined value changing unit 142 sets the second predetermined value B to the initial value.

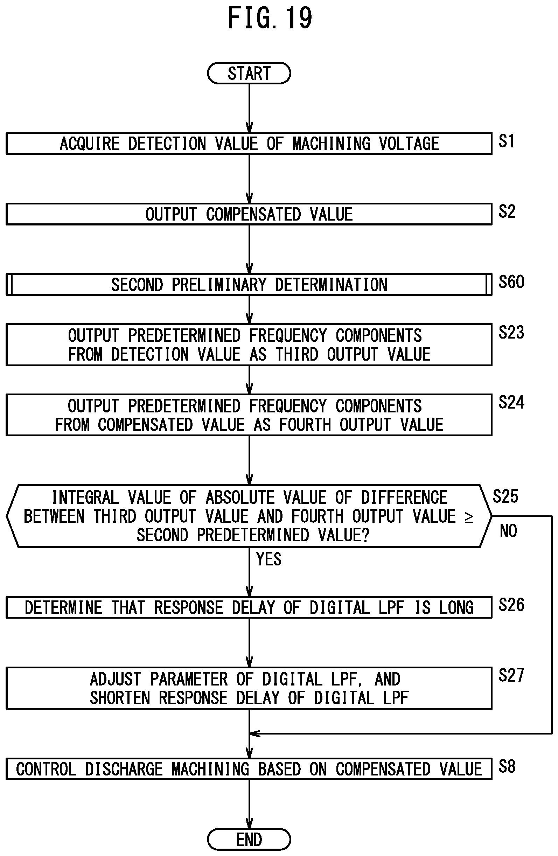

FIG. 19 is a flowchart illustrating an example of a processing sequence in relation to a machining control of the electrical discharge machining by the control device 20 of the fourth modification. The present processing sequence is periodically carried out, for example, by the processing circuit 80 of the control device 20. The reference numerals assigned to the steps of the present processing sequence shown in FIG. 19 partially coincide with the reference numerals assigned to the steps of the processing sequence shown in FIG. 9. In steps whose reference numerals coincide, the same processes are performed, and therefore, descriptions of the processes in those steps will be omitted.

When the process of step S2 is completed, a second preliminary determination process, which will be described later, is carried out in step S60. When the process of step S60 is completed, the present processing sequence proceeds to step S23. Concerning the processes of steps S23 to S27 and step S8, such steps are as described with reference to FIG. 9. When the process of step S8 is completed, the present processing sequence comes to an end.

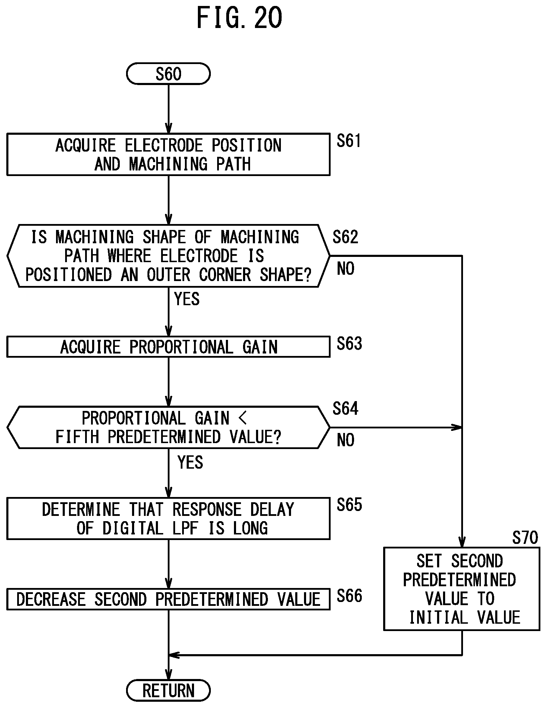

FIG. 20 is a flowchart illustrating an example of a processing sequence of the second preliminary determination. The second preliminary determination process is carried out in step S60 of FIG. 19. In step S61, the second preliminary determination unit 140 acquires from the machining control unit 98 the electrode position of the wire electrode E, and the machining path RT along which the wire electrode E moves. Moreover, the machining control unit 98 acquires the machining path RT by analyzing the machining program. Further, the machining control unit 98 acquires, from an encoder provided on the motor of the feed drive unit 60, the electrode position of the wire electrode E with respect to the workpiece W.

In step S62, the second preliminary determination unit 140 determines whether or not the machining shape of the machining path RT on which the electrode position is positioned is an outer corner shape. In the case that the electrode position is on the path segment RA of the outer corner shape, then the answer in step S62 becomes YES. In the case that the answer has become YES in step S62, the present processing sequence proceeds to step S63. In the case that the answer has become NO in step S62, the present processing sequence proceeds to step S70.

In step S63, the second preliminary determination unit 140 acquires the aforementioned proportional gain KP from the machining control unit 98. In step S64, the second preliminary determination unit 140 determines whether or not the proportional gain KP acquired in step S63 is smaller than the fifth predetermined value KP0. In the case that the answer has become YES in step S64, the present processing sequence proceeds to step S65. In the case that the answer has become NO in step S44, the present processing sequence proceeds to step S70.

In step S65, the second preliminary determination unit 140 determines that the response delay of the digital LPF 92 is long. In step S66, the second predetermined value changing unit 142 decreases the second predetermined value B in the Equation (3) by a predetermined amount of decrease. When the process of step S66 is completed, the process of step S60 is completed. The present processing sequence proceeds to step S23 in FIG. 19. In step S25, the second determination of comparing the integral value IV obtained by integrating the absolute value of the difference between the third output value MD and the fourth output value MC with the second predetermined value B that has been decreased in step S66 is carried out by the second determination processing unit 122.

In step S70, the second predetermined value changing unit 142 sets the second predetermined value B in the Equation (3) to a predetermined initial value. When the process of step S70 is completed, the process of step S60 is completed. The present processing sequence proceeds to step S23 in FIG. 19.

In the present modification, in comparison with the second embodiment, the electrical discharge machining control based on the compensated value C by the machining control unit 98 can be further improved.

(Modification 5)

The above modifications 1 to 4 may be optionally combined.

In the above-described embodiments and the modifications, at least one of the degree of noise removal by the digital LPF 92 or the response delay of the digital LPF 92 is determined based on the detection value D and the compensated value C. Based on such a determination result, the parameter of the digital LPF 92 is adjusted. Accordingly, the electrical discharge machining is stable, and further, the machining accuracy is high.

The following Supplementary Notes are further disclosed in relation to the above embodiments and the modifications.

(Supplementary Note 1)

The control device (20) for the wire electrical discharge machine (10), which carries out electrical discharge machining on the workpiece (W), by applying the machining voltage to the electrode gap (G) between the wire electrode (E) and the workpiece to generate the electrical discharge at the electrode gap while moving the wire electrode and the workpiece relatively along the machining path (RT), includes the acquisition unit (90) that acquires the detection value (D) of the machining voltage from the voltage sensor (V) that detects the machining voltage, the digital low pass filter (92) that outputs the compensated value (C) obtained by compensating the detection value by removing noise from the detection value, the determination unit (94, 94A) that carries out, based on the detection value and the compensated value, at least one of the first determination to determine the degree of noise removal by the digital low pass filter, or the second determination to determine the response delay of the digital low pass filter, the adjustment unit (96) that adjusts the parameter $(n, \alpha)$ of the digital low pass filter, based on the determination result of the determination unit, and the machining control unit (98) that controls the electrical discharge machining based on the compensated value.

(Supplementary Note 2)

In the control device for the wire electrical discharge machine according to Supplementary Note 1, the determination unit may include the digital high pass filter (110) that outputs, in the interval of the predetermined sampling time (T), the frequency components in the high frequency band including the frequency band higher than the passband of the digital low pass filter, from the detection value and the compensated value, respectively as the first output value (HD) and the second output value (HC), and the first determination processing unit (112) that carries out the first determination based on the amplitude (X) of the first output value and the amplitude (Y) of the second output value, and, in the first determination, in the case it is determined that the degree of noise removal by the digital low pass filter is weak, the adjustment unit may adjust the parameter, and may thereby strengthen the degree of noise removal by the digital low pass filter.

(Supplementary Note 3)

In the control device for the wire electrical discharge machine according to Supplementary Note 2, in the first determination, the first determination processing unit may compare, with the first predetermined value (A), the ratio of the amplitude of the second output value to the amplitude of the first output value, and in the case that the ratio is greater than or equal to the first predetermined value, the first determination processing unit may determine that the degree of noise removal by the digital low pass filter is weak.

(Supplementary Note 4)

The control device for the wire electrical discharge machine according to Supplementary Note 3, may further include the first preliminary determination unit (130) that determines that the degree of noise removal of the digital low pass filter is weak, in the case that the shape of the machining path is the inner corner shape that is curved in a manner so that the workpiece is machined into a concave shape, and that conditions in which the discharge power (PR) of the electrical discharge is smaller than the third predetermined value (PR0) and in which the discharge pulse width (PW) of the electrical discharge is smaller than the fourth predetermined value (PW0) is satisfied, and the first predetermined value changing unit (132) which decreases the first predetermined value, in the case that the first preliminary determination unit determines that the degree of noise removal by the digital low pass filter is weak, and the first determination processing unit may carry out the first determination by comparing the ratio with the first predetermined value that has been decreased.

(Supplementary Note 5)

In the control device for the wire electrical discharge machine according to any one of Supplementary Notes 1 to 4, the determination unit may include the digital band pass filter (120) that outputs, in the interval of the predetermined sampling time, frequency components in a predetermined frequency including a frequency band that is predetermined according to the passband of the digital low pass filter from the detection value and the compensated value, respectively as the third output value (MD) and the fourth output value (MC), and the second determination processing unit (122) that carries out the second determination based on the difference between the third output value and the fourth output value, and, in the second determination, in the case it is determined that the response delay of the digital low pass filter is long, the adjustment unit adjusts the parameter, and thereby shortens the response delay of the digital low pass filter.

(Supplementary Note 6)

In the control device for the wire electrical discharge machine according to Supplementary Note 5, the second determination processing unit, in the second determination, may compare, with the second predetermined value (B), the integral value (IV) obtained by integrating the absolute value of the difference between the third output value and the fourth output value over the predetermined sampling time of the digital band pass filter, and in the case that the integral value is greater than or equal to the second predetermined value, the second determination processing unit may determine that the response delay of the digital low pass filter is long.

(Supplementary Note 7)

In the control device for the wire electrical discharge machine according to Supplementary Note 6, the speed at which the wire electrode and the workpiece move relative to each other may be determined based on the machining voltage and the proportional gain (KP), and the control device may further include the second preliminary determination unit (140) that determines that the response delay of the digital low pass filter is long, in the case that the shape of the machining path is the outer corner shape that is curved in a manner so that the workpiece is machined into a convex shape, and that the condition in which the proportional gain is smaller than the fifth predetermined value (KP0) is satisfied and the second predetermined value changing unit (142) which decreases the second predetermined value, in the case that the second preliminary determination unit determines that the response delay of the digital low pass filter is long, and the second determination processing unit may carry out the second determination by comparing the integral value with the second predetermined value that has been decreased.

(Supplementary Note 8)

In the control device for the wire electrical discharge machine according to any one of Supplementary Notes 1 to 7, the machining control unit may control, based on the compensated value, at least one of the relative speed between the wire electrode and the workpiece, or the discharge power of the electrical discharge.

(Supplementary Note 9)

In the control device for the wire electrical discharge machine according to any one of Supplementary Notes 1 to 8, the digital low pass filter may be the moving average filter that, each time that the detection value is acquired, outputs the average value of the predetermined number (n) of the detection values that were acquired in the past, as the compensated value corresponding to the detection value that has been acquired, and the parameter may be the predetermined number.

(Supplementary Note 10)

In the control device for the wire electrical discharge machine according to any one of Supplementary Notes 1 to 8, the digital low pass filter may be the weighted average filter that, each time that the detection value is acquired, outputs the weighted average value obtained by using the detection value, the previously-output compensated value, and the weight ($\alpha$), as the compensated value corresponding to the detection value that has been acquired, and the parameter may be the weight.

(Supplementary Note 11)

The control method for the wire electrical discharge machine (10), which carries out the electrical discharge machining on the workpiece (W), by applying the machining voltage to the electrode gap (G) between the wire electrode (E) and the workpiece to generate the electrical discharge at the electrode gap while moving the wire electrode and the workpiece relatively along the machining path (RT), includes the acquisition step of acquiring the detection value (D) of the machining voltage from the voltage sensor (V) that detects the machining voltage, the compensated value output step of outputting the compensated value (C) obtained by compensating the detection value by removing noise from the detection value by using the digital low pass filter (92), the determination step of carrying out, based on the detection value and the compensated value, at least one of the first determination to determine the degree of noise removal by the digital low pass filter, or the second determination to determine the response delay of the digital low pass filter, the adjustment step of adjusting the parameter (n, $\alpha$) of the digital low pass filter, based on the determination result in the determination step, and the machining control step of controlling the electrical discharge machining based on the compensated value.

(Supplementary Note 12)

In the control method for the wire electrical discharge machine according to Supplementary Note 11, the determination step may include the first frequency component output step of, by the digital high pass filter (110), outputting, in the interval of the predetermined sampling time (T), components of a frequency that is higher than the passband of the digital low pass filter, from the detection value and the compensated value, respectively as the first output value (HD) and the second output value (HC), and the first determination processing step of carrying out the first determination based on the amplitude (X) of the first output value and the amplitude (Y) of the second output value, and, in the first determination, in the case it is determined that the degree of noise removal by the digital low pass filter is weak, in the adjustment step, the parameter may be adjusted, and the degree of noise removal by the digital low pass filter may be thereby strengthened.

(Supplementary Note 13)

In the control method for the wire electrical discharge machine according to Supplementary Note 12, in the first determination of the first determination processing step, the ratio of the amplitude of the second output value to the amplitude of the first output value may be compared with the first predetermined value (A), and in the case that the ratio is greater than or equal to the first predetermined value, the degree of noise removal by the digital low pass filter may be determined to be weak.

(Supplementary Note 14)

In the control method for the wire electrical discharge machine according to any one of Supplementary Notes 11 to 13, the determination step may include the second frequency component output step of, by the digital band pass filter, outputting, in the interval of the predetermined sampling time, the components of a frequency that are predetermined according to the passband of the digital low pass filter, from the detection value and the compensated value, respectively as the third output value (MD) and the fourth output value (MC), and the second determination processing step of carrying out the second determination based on the difference between the third output value and the fourth output value, and, in the second determination, in the case it is determined that the response delay of the digital low pass filter is long, in the adjustment step, the parameter may be adjusted, and the response delay of the digital low pass filter may be thereby shortened.

(Supplementary Note 15)

In the control method for the wire electrical discharge machine according to Supplementary Note 14, in the second determination of the second determination processing step, the integral value (IV) obtained by integrating the absolute value of the difference between the third output value and the fourth output value over the predetermined sampling time of the digital band pass filter may be compared with the second predetermined value (B), and in the case that the integral value is greater than or equal to the second predetermined value, the response delay of the digital low pass filter may be determined to be long.

Although the present disclosure has been described in detail, the present disclosure is not necessarily limited to each of the respective embodiments. These embodiments may be subjected to various additions, substitutions, modifications, partial deletions, and the like, within a range that does not deviate from the essence and gist of the present disclosure, or the spirit of the disclosure as derived from the contents described in the claims and their equivalents. Further, these embodiments can also be implemented together in combination. For example, in the above-described embodiments, the order of each of the operations and the order of each of the processes are merely shown as examples, and the present invention is not necessarily limited to these examples. Further, the same applies in the case that numerical values or mathematical expressions are used in the description of the aforementioned embodiments.

REFERENCE SIGNS LIST

| | |
|---|---|
| 10: | wire electrical discharge machine |
| 20: | control device |
| 30: | machining power supply |
| 50: | displacement drive unit |
| 52: | table |
| 60: | feed drive unit |
| 62: | upper wire guide |
| 64: | lower wire guide |
| 80: | processing circuit |
| 82: | storage device |
| 90: | acquisition unit |
| 92: | digital LPF (digital low pass filter) |
| 94: | determination unit |
| 96: | adjustment unit |
| 98: | machining control unit |
| 110: | digital HPF (digital high pass filter) |
| 112: | first determination processing unit |
| 120: | digital BPF (digital band pass filter) |
| 122: | second determination processing unit |
| 130: | first preliminary determination unit |
| 132: | first predetermined value changing unit |
| 140: | second preliminary determination unit |

142:    second predetermined value changing unit

**Claims**

1.  A control device for a wire electrical discharge machine configured to carry out electrical discharge machining on a workpiece, by applying a machining voltage to an electrode gap between a wire electrode and the workpiece to generate an electrical discharge at the electrode gap while moving the wire electrode and the workpiece relatively along a machining path, the control device comprising:

    an acquisition unit configured to acquire a detection value of the machining voltage from a voltage sensor configured to detect the machining voltage;
    a digital low pass filter configured to output a compensated value obtained by compensating the detection value by removing noise from the detection value;
    a determination unit configured to carry out, based on the detection value and the compensated value, at least one of a first determination to determine a degree of noise removal by the digital low pass filter, or a second determination to determine a response delay of the digital low pass filter;
    an adjustment unit configured to adjust a parameter of the digital low pass filter, based on a determination result of the determination unit; and
    a machining control unit configured to control the electrical discharge machining based on the compensated value.

2.  The control device for the wire electrical discharge machine according to claim 1, wherein the determination unit comprises:

    a digital high pass filter configured to output, in an interval of a predetermined sampling time, frequency components in a high frequency band including a frequency band higher than a passband of the digital low pass filter, from the detection value and the compensated value, respectively as a first output value and a second output value; and
    a first determination processing unit configured to carry out the first determination based on an amplitude of the first output value and an amplitude of the second output value, and
    wherein, in the first determination, in a case it is determined that the degree of noise removal by the digital low pass filter is weak, the adjustment unit adjusts the parameter, and thereby strengthens the degree of noise removal by the digital low pass filter.

3.  The control device for the wire electrical discharge machine according to claim 2, wherein, in the first determination, the first determination processing unit compares, with a first predetermined value, a ratio of the amplitude of the second output value to the amplitude of the first output value, and in a case that the ratio is greater than or equal to the first predetermined value, the first determination processing unit determines that the degree of noise removal by the digital low pass filter is weak.

4.  The control device for the wire electrical discharge machine according to claim 3, further comprising;

    a first preliminary determination unit configured to determine that the degree of noise removal by the digital low pass filter is weak, in a case that a shape of the machining path is an inner corner shape that is curved in a manner so that the workpiece is machined into a concave shape, and that conditions in which a discharge power of the electrical discharge is smaller than a third predetermined value and in which a discharge pulse width of the electrical discharge is smaller than a fourth predetermined value are satisfied; and
    a first predetermined value changing unit configured to decrease the first predetermined value, in a case that the first preliminary determination unit determines that the degree of noise removal by the digital low pass filter is weak,
    wherein the first determination processing unit carries out the first determination by comparing the ratio with the first predetermined value that has been decreased.

5.  The control device for the wire electrical discharge machine according to any one of claims 1 to 4, wherein the determination unit comprises:

    a digital band pass filter configured to output, in an interval of a predetermined sampling time, frequency components in a predetermined frequency band including a frequency band that is predetermined according to a passband of the digital low pass filter, from the detection value and the compensated value, respectively as a third output value and a fourth output value; and

a second determination processing unit configured to carry out the second determination based on a difference between the third output value and the fourth output value, and

wherein, in the second determination, in a case it is determined that the response delay of the digital low pass filter is long, the adjustment unit adjusts the parameter, and thereby shortens the response delay of the digital low pass filter.

6. The control device for the wire electrical discharge machine according to claim 5, wherein the second determination processing unit, in the second determination, compares, with a second predetermined value, an integral value obtained by integrating an absolute value of the difference between the third output value and the fourth output value over the predetermined sampling time of the digital band pass filter, and in a case that the integral value is greater than or equal to the second predetermined value, the second determination processing unit determines that the response delay of the digital low pass filter is long.

7. The control device for the wire electrical discharge machine according to claim 6, wherein a speed at which the wire electrode and the workpiece move relative to each other is determined based on the machining voltage and a proportional gain, the control device further comprising:

   a second preliminary determination unit configured to determine that the response delay of the digital low pass filter is long, in a case that a shape of the machining path is an outer corner shape that is curved in a manner so that the workpiece is machined into a convex shape, and that a condition in which the proportional gain is smaller than a fifth predetermined value is satisfied; and

   a second predetermined value changing unit configured to decrease the second predetermined value, in a case that the second preliminary determination unit determines that the response delay of the digital low pass filter is long,

   wherein the second determination processing unit carries out the second determination by comparing the integral value with the second predetermined value that has been decreased.

8. The control device for the wire electrical discharge machine according to any one of claims 1 to 7, wherein the machining control unit controls, based on the compensated value, at least one of a relative speed between the wire electrode and the workpiece, or a discharge power of the electrical discharge.

9. The control device for the wire electrical discharge machine according to any one of claims 1 to 8, wherein:

   the digital low pass filter is a moving average filter configured to, each time that the detection value is acquired, output an average value of a predetermined number of the detection values that were acquired in a past, as the compensated value corresponding to the detection value that has been acquired; and

   the parameter is the predetermined number.

10. The control device for the wire electrical discharge machine according to any one of claims 1 to 8, wherein:

   the digital low pass filter is a weighted average filter configured to, each time that the detection value is acquired, output a weighted average value obtained by using the detection value, the previously-output compensated value, and a weight, as the compensated value corresponding to the detection value that has been acquired; and

   the parameter is the weight.

11. A control method for a wire electrical discharge machine configured to carry out electrical discharge machining on a workpiece, by applying a machining voltage to an electrode gap between a wire electrode and the workpiece to generate an electrical discharge at the electrode gap while moving the wire electrode and the workpiece relatively along a machining path, the control method comprising:

   an acquisition step of acquiring a detection value of the machining voltage from a voltage sensor configured to detect the machining voltage;

   a compensated value output step of outputting a compensated value obtained by compensating the detection value by removing noise from the detection value by using a digital low pass filter;

   a determination step of carrying out, based on the detection value and the compensated value, at least one of a first determination to determine a degree of noise removal by the digital low pass filter, or a second determination to determine a response delay of the digital low pass filter;

an adjustment step of adjusting a parameter of the digital low pass filter, based on a determination result in the determination step; and

a machining control step of controlling the electrical discharge machining based on the compensated value.

12. The control method for the wire electrical discharge machine according to claim 11, wherein the determination step comprises:

a first frequency component output step of, by a digital high pass filter, outputting, in an interval of a predetermined sampling time, components of a frequency that is higher than a passband of the digital low pass filter, from the detection value and the compensated value, respectively as a first output value and a second output value; and

a first determination processing step of carrying out the first determination based on an amplitude of the first output value and an amplitude of the second output value, and

wherein, in the first determination, in a case it is determined that the degree of noise removal by the digital low pass filter is weak, in the adjustment step, the parameter is adjusted, and the degree of noise removal by the digital low pass filter is thereby strengthened.

13. The control method for the wire electrical discharge machine according to claim 12, wherein, in the first determination of the first determination processing step, a ratio of the amplitude of the second output value to the amplitude of the first output value is compared with a first predetermined value, and in a case that the ratio is greater than or equal to the first predetermined value, the degree of noise removal by the digital low pass filter is determined to be weak.

14. The control method for the wire electrical discharge machine according to any one of claims 11 to 13, wherein the determination step comprises:

a second frequency component output step of, by a digital band pass filter, outputting, in an interval of a predetermined sampling time, components of a frequency that are predetermined according to a passband of the digital low pass filter, from the detection value and the compensated value, respectively as a third output value and a fourth output value; and

a second determination processing step of carrying out the second determination based on a difference between the third output value and the fourth output value, and

wherein, in the second determination, in a case it is determined that the response delay of the digital low pass filter is long, in the adjustment step, the parameter is adjusted, and the response delay of the digital low pass filter is thereby shortened.

15. The control method for the wire electrical discharge machine according to claim 14, wherein, in the second determination of the second determination processing step, an integral value obtained by integrating an absolute value of the difference between the third output value and the fourth output value over the predetermined sampling time of the digital band pass filter is compared with a second predetermined value, and in a case that the integral value is greater than or equal to the second predetermined value, the response delay of the digital low pass filter is determined to be long.

FIG. 1

# FIG. 2

EP 4 599 971 A1

FIG. 3

EP 4 599 971 A1

FIG. 4

# FIG. 5

START

ACQUIRE DETECTION VALUE OF MACHINING VOLTAGE — S1

OUTPUT COMPENSATED VALUE — S2

OUTPUT HIGH FREQUENCY COMPONENTS FROM
DETECTION VALUE AS FIRST OUTPUT VALUE — S3

OUTPUT HIGH FREQUENCY COMPONENTS FROM
COMPENSATED VALUE AS SECOND OUTPUT VALUE — S4

RATIO OF AMPLITUDE OF SECOND OUTPUT VALUE
TO AMPLITUDE OF FIRST OUTPUT VALUE ≥
FIRST PREDETERMINED VALUE? — S5

NO

YES

DETERMINE THAT DEGREE OF NOISE
REMOVAL BY DIGITAL LPF IS WEAK — S6

ADJUST PARAMETER OF DIGITAL LPF, AND STRENGTHEN
DEGREE OF NOISE REMOVAL BY DIGITAL LPF — S7

CONTROL DISCHARGE MACHINING
BASED ON COMPENSATED VALUE — S8

END

FIG. 6A

FIG. 6B

EP 4 599 971 A1

# FIG. 7

```
┌─────────────────────────────────────────┐
│         CONTROL DEVICE              ──20  │
│  ┌───────────────────────────────┐       │
│  │      PROCESSING CIRCUIT    ──80│       │
│  │  ┌─────────────────────────┐   │       │
│  │  │    ACQUISITION UNIT ──90 │   │       │
│  │  └─────────────────────────┘   │       │
│  │  ┌─────────────────────────┐   │       │
│  │  │      DIGITAL LPF    ──92 │   │       │
│  │  └─────────────────────────┘   │       │
│  │  ┌─────────────────────────┐   │       │
│  │  │  DETERMINATION UNIT ──94A│   │       │
│  │  │  ┌───────────────────┐   │   │       │
│  │  │  │  DIGITAL BPF  ──120│   │   │       │
│  │  │  └───────────────────┘   │   │       │
│  │  │  ┌───────────────────┐   │   │       │
│  │  │  │     SECOND        │   │   │       │
│  │  │  │  DETERMINATION ──122   │   │       │
│  │  │  │  PROCESSING UNIT  │   │   │       │
│  │  │  └───────────────────┘   │   │       │
│  │  └─────────────────────────┘   │       │
│  │  ┌─────────────────────────┐   │       │
│  │  │   ADJUSTMENT UNIT   ──96 │   │       │
│  │  └─────────────────────────┘   │       │
│  │  ┌─────────────────────────┐   │       │
│  │  │     MACHINING           │   │       │
│  │  │   CONTROL UNIT      ──98 │   │       │
│  │  └─────────────────────────┘   │       │
│  └───────────────────────────────┘       │
│  ┌───────────────────────────────┐       │
│  │      STORAGE DEVICE       ──82 │       │
│  └───────────────────────────────┘       │
└─────────────────────────────────────────┘
```

FIG. 8

# FIG. 9

```
        START
          │
          ▼
```

ACQUIRE DETECTION VALUE OF MACHINING VOLTAGE    S1

OUTPUT COMPENSATED VALUE    S2

OUTPUT PREDETERMINED FREQUENCY COMPONENTS
FROM DETECTION VALUE AS THIRD OUTPUT VALUE    S23

OUTPUT PREDETERMINED FREQUENCY COMPONENTS
FROM COMPENSATED VALUE AS FOURTH OUTPUT VALUE    S24

INTEGRAL VALUE OF ABSOLUTE VALUE
OF DIFFERENCE BETWEEN THIRD OUTPUT
VALUE AND FOURTH OUTPUT VALUE ≥
SECOND PREDETERMINED VALUE?    S25    NO

YES

DETERMINE THAT RESPONSE DELAY
OF DIGITAL LPF IS LONG    S26

ADJUST PARAMETER OF DIGITAL LPF, AND
SHORTEN RESPONSE DELAY OF DIGITAL LPF    S27

CONTROL DISCHARGE MACHINING
BASED ON COMPENSATED VALUE    S8

        END

EP 4 599 971 A1

# FIG. 10A

# FIG. 10B

VOLTAGE

D

C

TIME t

# FIG. 10C

VOLTAGE

D

C

TIME t

# FIG. 11

# FIG. 12

FIG. 13

# FIG. 14

CONTROL DEVICE — 20

PROCESSING CIRCUIT — 80

ACQUISITION UNIT — 90

DIGITAL LPF — 92

DETERMINATION UNIT — 94

DIGITAL HPF — 110

FIRST DETERMINATION PROCESSING UNIT — 112

FIRST PRELIMINARY DETERMINATION UNIT — 130

FIRST PREDETERMINED VALUE CHANGING UNIT — 132

ADJUSTMENT UNIT — 96

MACHINING CONTROL UNIT — 98

STORAGE DEVICE — 82

# FIG. 15

START

ACQUIRE DETECTION VALUE OF MACHINING VOLTAGE — S1

OUTPUT COMPENSATED VALUE — S2

FIRST PRELIMINARY DETERMINATION — S40

OUTPUT HIGH FREQUENCY COMPONENTS FROM DETECTION VALUE AS FIRST OUTPUT VALUE — S3

OUTPUT HIGH FREQUENCY COMPONENTS FROM COMPENSATED VALUE AS SECOND OUTPUT VALUE — S4

RATIO OF AMPLITUDE OF SECOND OUTPUT VALUE TO AMPLITUDE OF FIRST OUTPUT VALUE ≥ FIRST PREDETERMINED VALUE? — S5

NO

YES

DETERMINE THAT DEGREE OF NOISE REMOVAL BY DIGITAL LPF IS WEAK — S6

ADJUST PARAMETER OF DIGITAL LPF, AND STRENGTHEN DEGREE OF NOISE REMOVAL BY DIGITAL LPF — S7

CONTROL DISCHARGE MACHINING BASED ON COMPENSATED VALUE — S8

END

# FIG. 16

S40

ACQUIRE ELECTRODE POSITION
AND MACHINING PATH — S41

IS MACHINING SHAPE OF MACHINING
PATH WHERE ELECTRODE IS
POSITIONED AN INNER CORNER SHAPE? — S42
— NO

YES

ACQUIRE DISCHARGE POWER
AND DISCHARGE PULSE WIDTH — S43

DISCHARGE POWER <
THIRD PREDETERMINED VALUE? — S44
— NO

YES

DISCHARGE PULSE WIDTH <
FOURTH PREDETERMINED VALUE — S45
— NO

YES

DETERMINE THAT DEGREE OF NOISE
REMOVAL BY DIGITAL LPF IS WEAK — S46

SET FIRST
PREDETERMINED
VALUE TO
INITIAL VALUE — S50

DECREASE FIRST PREDETERMINED VALUE — S47

RETURN

# FIG. 17A

# FIG. 17B

EP 4 599 971 A1

# FIG. 18

| | |
|---|---|
| **CONTROL DEVICE** | — 20 |
| **PROCESSING CIRCUIT** | — 80 |
| ACQUISITION UNIT | — 90 |
| DIGITAL LPF | — 92 |
| DETERMINATION UNIT | — 94A |
| DIGITAL BPF | — 120 |
| SECOND DETERMINATION PROCESSING UNIT | — 122 |
| SECOND PRELIMINARY DETERMINATION UNIT | — 140 |
| SECOND PREDETERMINED VALUE CHANGING UNIT | — 142 |
| ADJUSTMENT UNIT | — 96 |
| MACHINING CONTROL UNIT | — 98 |
| STORAGE DEVICE | — 82 |

# FIG. 19

```
                    ( START )
                        │
                        ▼
┌──────────────────────────────────────────────────┐  S1
│   ACQUIRE DETECTION VALUE OF MACHINING VOLTAGE     │
└──────────────────────────────────────────────────┘
                        │
                        ▼
┌──────────────────────────────────────────────────┐  S2
│              OUTPUT COMPENSATED VALUE              │
└──────────────────────────────────────────────────┘
                        │
                        ▼
┌──────────────────────────────────────────────────┐  S60
│         SECOND PRELIMINARY DETERMINATION           │
└──────────────────────────────────────────────────┘
                        │
                        ▼
┌──────────────────────────────────────────────────┐  S23
│      OUTPUT PREDETERMINED FREQUENCY COMPONENTS     │
│      FROM DETECTION VALUE AS THIRD OUTPUT VALUE    │
└──────────────────────────────────────────────────┘
                        │
                        ▼
┌──────────────────────────────────────────────────┐  S24
│      OUTPUT PREDETERMINED FREQUENCY COMPONENTS     │
│     FROM COMPENSATED VALUE AS FOURTH OUTPUT VALUE  │
└──────────────────────────────────────────────────┘
                        │
                        ▼
```

S25

INTEGRAL VALUE OF ABSOLUTE VALUE OF DIFFERENCE
BETWEEN THIRD OUTPUT VALUE AND FOURTH OUTPUT VALUE $\geq$
SECOND PREDETERMINED VALUE?

NO

YES

```
                        │
                        ▼
┌──────────────────────────────────────────────────┐  S26
│  DETERMINE THAT RESPONSE DELAY OF DIGITAL LPF IS LONG │
└──────────────────────────────────────────────────┘
                        │
                        ▼
┌──────────────────────────────────────────────────┐  S27
│         ADJUST PARAMETER OF DIGITAL LPF, AND       │
│       SHORTEN RESPONSE DELAY OF DIGITAL LPF        │
└──────────────────────────────────────────────────┘
                        │
                        ▼
┌──────────────────────────────────────────────────┐  S8
│ CONTROL DISCHARGE MACHINING BASED ON COMPENSATED VALUE │
└──────────────────────────────────────────────────┘
                        │
                        ▼
                    ( END )
```

# FIG. 20

```
        ┌─────────┐
        │   S60   │
        └─────────┘
             │
             ▼
┌──────────────────────────────┐  S61
│  ACQUIRE ELECTRODE POSITION   │
│     AND MACHINING PATH        │
└──────────────────────────────┘
             │
             ▼
   ╱─────────────────────────╲  S62
  ╱  IS MACHINING SHAPE OF    ╲
 ╱  MACHINING PATH WHERE       ╲    NO
 ╲  ELECTRODE IS POSITIONED    ╱─────────────┐
  ╲ AN OUTER CORNER SHAPE?    ╱               │
   ╲─────────────────────────╱                │
             │ YES                            │
             ▼                                │
┌──────────────────────────────┐  S63         │
│   ACQUIRE PROPORTIONAL GAIN   │             │
└──────────────────────────────┘             │
             │                                │
             ▼                                │
   ╱─────────────────────╲  S64               │
  ╱   PROPORTIONAL GAIN <  ╲      NO           │
  ╲  FIFTH PREDETERMINED    ╱────────────┐    │
   ╲     VALUE?            ╱             │    │
    ╲───────────────────╱               │    │
             │ YES                      ▼    ▼
             ▼                   ┌──────────────────┐  S70
┌──────────────────────────────┐│  SET SECOND      │
│  DETERMINE THAT RESPONSE DELAY││  PREDETERMINED   │
│   OF DIGITAL LPF IS LONG      ││  VALUE TO        │
└──────────────────────────────┘│  INITIAL VALUE   │
         S65 │                   └──────────────────┘
             ▼                            │
┌──────────────────────────────┐  S66      │
│ DECREASE SECOND PREDETERMINED │          │
│            VALUE              │          │
└──────────────────────────────┘          │
             │◄─────────────────────────────┘
             ▼
        ┌─────────┐
        │ RETURN  │
        └─────────┘
```

## INTERNATIONAL SEARCH REPORT

| International application No. |
| --- |
| **PCT/JP2022/042596** |

### A. CLASSIFICATION OF SUBJECT MATTER

**B23H 7/02**(2006.01)i
FI:  B23H7/02 S

According to International Patent Classification (IPC) or to both national classification and IPC

### B. FIELDS SEARCHED

Minimum documentation searched (classification system followed by classification symbols)

B23H7/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | WO 2017/138137 A1 (MITSUBISHI ELECTRIC CORP) 17 August 2017 (2017-08-17) claims 1-7, fig. 1-10 | 1-15 |
| A | JP 2000-167717 A (SODICK CO LTD) 20 June 2000 (2000-06-20) claims 1-8 | 1-15 |
| A | JP 2-109633 A (BROTHER IND LTD) 23 April 1990 (1990-04-23) claim 1, fig. 1-9 | 1-15 |

☐ Further documents are listed in the continuation of Box C.  ☑ See patent family annex.

| | | |
| --- | --- | --- |
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **23 January 2023** | **07 February 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2022/042596**

| Patent document cited in search report | Publication date (day/month/year) | Patent family member(s) | Publication date (day/month/year) |
|---|---|---|---|
| WO 2017/138137 A1 | 17 August 2017 | CN 108698146 A claims 1-7, fig. 1-10 | |
| JP 2000-167717 A | 20 June 2000 | (Family: none) | |
| JP 2-109633 A | 23 April 1990 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6883138 B